Europäisches Patentamt

European Patent Office

Office européen des brevets

(11) Numéro de publication: **0 404 631 B1**

(12) **FASCICULE DE BREVET EUROPEEN**

(45) Date de publication du fascicule du brevet: **27.12.95**   (51) Int. Cl.6: **C03C 14/00**, C03C 3/085

(21) Numéro de dépôt: **90401608.6**

(22) Date de dépôt: **12.06.90**

Le dossier contient des informations techniques présentées postérieurement au dépôt de la demande et ne figurant pas dans le présent fascicule.

(54) **Matériaux composites à matrice vitreuse renforcée et leur procédé de préparation**

(30) Priorité: **21.06.89 FR 8908259**

(43) Date de publication de la demande:
**27.12.90 Bulletin 90/52**

(45) Mention de la délivrance du brevet:
**27.12.95 Bulletin 95/52**

(84) Etats contractants désignés:
**AT BE CH DE DK ES FR GB GR IT LI LU NL SE**

(56) Documents cités:
**EP-A- 0 095 433**
**EP-A- 0 128 409**
**EP-A- 0 255 023**
**EP-A- 0 290 146**

(73) Titulaire: **AEROSPATIALE Société Nationale Industrielle**
**37, Boulevard de Montmorency**
**F-75781 Paris Cédex 16 (FR)**

(72) Inventeur: **Drouet, Claudette**
**27, rue des Palombes**
**F-65290 Juillan (FR)**
Inventeur: **Goursat, Paul**
**Haut Félix**
**F-87430 Verneuil/sur/Vienne (FR)**
Inventeur: **Langrone, Bernard**

**F-64460 Montsegur (FR)**
Inventeur: **Seraudie, Christophe**
**Jugealf-Nazareth**
**F-19500 Meyssac (FR)**

(74) Mandataire: **Dubois-Chabert, Guy et al**
**c/o BREVATOME**
**25, rue de Ponthieu**
**F-75008 Paris (FR)**

Rank Xerox (UK) Business Services
(3.10/3.09/3.3.3)

**Description**

La présente invention concerne des matériaux composites à matrice vitreuse renforcée, ainsi que certains de leurs procédés de préparation.

Les matériaux composites à matrice verre et à renforts notamment fibreux présentent aujourd'hui un grand intérêt technique compte tenu de leurs bonnes propriétés thermomécaniques et, pour cette raison, ils peuvent être avantageusement utilisés dans les domaines aéronautiques et spatiaux pour des applications nécessitant notamment une bonne tenue aux moyennes températures, c'est-à-dire de l'ordre de 600 à 1000°C.

Cependant, la plupart des matériaux de ce type développés à ce jour ne donnent pas entièrement satisfaction, tant au niveau de leurs propriétés finales qu'au niveau de leur mode d'élaboration.

La demande de brevet EP 0 290 146 décrit un composite à matrice céramique renforcée par des fibres présentant une résistance au cisaillement interlaminaire. Cette matrice comprend 60 à 75% de $SiO_2$, 15 à 25% de $Al_2O_3$, 1 à 5% de $LiO_2$, 0 à 10% d'agents de formation de germes cristallins et le reste d'oxydes. Le composite obtenu comprend des fibres de renfort d'une matrice céramique constituée essentiellement d'aluminosilicate de lithium en phase cristalline de type $\beta$-quartz et $\beta$-spodumène.

Parmi les matériaux composites à matrice vitreuse les plus répandus et les plus performants, on peut distinguer essentiellement ceux pour lesquels la matrice est un verre borosilicaté dont la teneur en $B_2O_3$ est de l'ordre de 10 à 30 % en poids, et ceux pour lesquels la matrice est essentiellement à base de silice, c'est-à-dire de teneur en silice supérieure à 95 % en poids.

Les premiers ont pour inconvénient majeur de présenter une faible tenue à la corrosion, et ceci en raison de la présence de l'oxyde $B_2O_3$ qui est particulièrement sensible à l'hydrolyse, et les seconds peuvent présenter des résistances mécaniques, notamment au niveau des ténacités, insuffisantes pour certaines applications.

Les techniques les plus répandues pour fabriquer l'un et l'autre de ces matériaux consistent à imprégner une préforme fibreuse (agent de renforcement) au moyen d'une barbotine contenant, sous des formes les plus diverses, tous les éléments nécessaires à l'obtention de la composition vitreuse désirée. Puis on sèche la préforme ainsi imprégnée. On répète éventuellement les étapes d'imprégnation-séchage jusqu'à l'obtention d'un préimprégné ayant la fraction volumique de fibres recherchée, et/ou on empile puis solidarise entre eux par chauffage modéré des préimprégnés séchés dans le but d'obtenir des composites à renfort mono ou bi-directionnels de grandes tailles. Enfin on densifie cette préforme au moyen d'une étape de compression à chaud. Cette dernière étape ayant en particulier pour but de faire fluer le verre à travers les torons de la préforme, elle nécessite que la viscosité du verre soit relativement faible (inférieure à $10^7$ poises) et donc que la température de pressage soit élevée.

Ainsi, pour obtenir des résultats convenables en densité et en propriétés thermomécaniques, il est connu que les verres borosilicatés (température de transition vitreuse Tg de l'ordre de 530°C) doivent être pressés au minimum aux environs de 1150-1200°C, et que pour les verres essentiellement à base de silice (Tg de l'ordre de 850°C), cette température de pressage avoisine 1400-1600°C. Des températures de pressage élevées font à l'évidence courir le risque d'endommager les fibres qui constituent la structure de renforcement.

Par ailleurs, il est connu que la limite d'utilisation en température des matériaux composites à matrice verre est imposée par la température de transition vitreuse du verre considéré, et que généralement cette température limite est voisine de Tg + 100°C ; ainsi on observe que la température d'utilisation d'un composite à matrice borosilicatée est limitée à 600°C, et celle d'un composite à matrice silice à 1000°C.

On constate donc, pour les matériaux de l'art antérieur, un écart très important entre leur température d'utilisation ($T_u$) et la température de pressage ($T_p$) qu'il a été nécessaire de mettre en oeuvre pour les obtenir. Il en découle pour ceux-ci un intérêt économique et/ou industriel nettement amoindris.

Un premier objet de la présente invention est d'obvier aux inconvénients énoncés ci-dessus et notamment de proposer des matériaux composites à matrice vitreuse renforcée, pour lesquels l'écart ($T_p - T_u$) (c'est-à-dire l'écart entre la température d'élaboration par pressage à chaud et la température limite d'utilisation) soit le plus faible possible.

Un autre objet de la présente invention est de fournir des matériaux composites à matrice vitreuse renforcée présentant des tenues mécaniques à chaud améliorées.

Dans ce but, le matériau composite selon l'invention est du type comprenant une matrice en phase vitreuse continue englobant un agent de renforcement, et il est caractérisé par le fait que ladite matrice vitreuse est à base de silice, d'alumine, de zircone, d'oxydes d'alcalins et d'alcalino-terreux, et ceci dans des proportions pondérales, qui, rapportées à la masse totale de ladite matrice, répondent aux inégalités suivantes :

$$65\ \% \leq SiO_2 \leq 80\ \% \qquad\qquad (1)$$
$$7\ \% \leq Al_2O_3 \leq 20\ \% \qquad\qquad (2)$$
$$2\ \% \leq ZrO_2 \leq 10\ \% \qquad\qquad (3)$$
$$2\ \% \leq \Sigma A_2O \leq 7\ \% \qquad\qquad (4)$$
$$4\ \% \leq \Sigma BO \leq 10\ \% \qquad\qquad (5)$$

inégalités dans lesquelles $\Sigma A_2O$ et $\Sigma BO$ représentent la somme pondérale respectivement des oxydes d'alcalins et des oxydes d'alcalino-terreux présents dans ladite matrice.

Par ailleurs, l'invention concerne aussi un procédé de préparation d'un matériau composite défini ci-dessus qui est caractérisé par le fait qu'il comprend les étapes suivantes :

a) on imprègne un agent de renforcement au moyen d'une barbotine contenant tous les éléments nécessaires à l'obtention de la matrice vitreuse désirée,

b) on sèche l'agent de renforcement ainsi imprégné,

c) on répète éventuellement les étapes d'imprégnation-séchage jusqu'à l'obtention d'un préimprégné ayant la fraction volumique de fibres recherchée,

d) on procède éventuellement à l'empilement puis au collage de préimprégnés identiques dans le but d'obtenir des composites à renfort mono ou bidirectionnel de grandes tailles,

e) puis on densifie la préforme obtenue.

Les matériaux de l'invention présentent une température limite d'utilisation qui est de l'ordre de 900°C et une température d'élaboration par pressage à chaud relativement basse de l'ordre de 1150°C. Ils ont un niveau de densification élevé, une porosité ouverte nulle ou quasiment nulle et enfin une très bonne tenue à la corrosion.

Outre le fait qu'ils présentent un écart $(T_p - T_u)$ faible, de l'ordre de 250°C, ces mêmes matériaux possèdent aussi des qualités mécaniques intéressantes. En effet leur tenue mécanique à chaud est améliorée, c'est-à-dire que leurs propriétés mécaniques à froid sont conservées à hautes températures et ceci même sous atmosphère oxydante. C'est ainsi que la matrice de l'invention possède des coefficients de dilatation du même ordre que ceux des agents de renforcement.

D'autres caractéristiques et avantages de l'invention apparaîtront plus clairement à la lecture de la description qui va suivre.

Comme on l'a vu plus haut, la matrice vitreuse est à base de silice, d'alumine, de zircone, d'oxydes alcalins et alcalino-terreux dans les porportions indiquées.

On notera que selon un mode particulier de réalisation de l'invention, la composition de la matrice est telle que le rapport $\Sigma A_2O/\Sigma BO$ varie entre 0,2 et 1.

Comme autre mode de réalisation particulier, on peut aussi mentionner la matrice de composition suivante :

$$65\% \leq SiO_2 \leq 75\%$$
$$10\% \leq Al_2O_3 \leq 15\%$$
$$2\% \leq ZrO_2 \leq 8\%$$
$$3\% \leq A_2O \leq 6\%$$
$$6\% \leq BO \leq 10\%$$

et encore plus particulièrement la matrice de composition ci-dessus avec le rapport $\Sigma A_2O/\Sigma BO$ décrit plus haut ou encore variant entre 0,4 et 0,8.

Pour les alcalins, on utilise généralement selon l'invention seul ou en combinaison le lithium, le sodium, le potassium et le cesium.

Selon les modes de réalisation préférentiels, on utilise majoritairement le potassium.

C'est ainsi qu'il est particulièrement avantageux que la teneur en $Na_2O$ dans la matrice vitreuse soit d'au plus 1% et de préférence inférieure à 0,5 % en poids, et ceci dans le but de limiter le coefficient de dilatation de ladite matrice.

Selon l'invention, il est en outre souhaitable que la teneur en $Li_2O$ dans la matrice vitreuse n'excède pas 0,5 % en poids, et ceci dans le but d'augmenter la tenue à la corrosion du composite ; de préférence, cette teneur sera choisie nulle.

En ce qui concerne les alcalino-terreux, on peut utiliser dans le cadre de l'invention le magnésium, le calcium, le baryum et le strontium, les trois premiers étant employés préférentiellement.

Par agents de renforcement, on entend préférentiellement selon l'invention des renforts céramiques de type fibreux constitués par un assemblage, organisé ou aléatoire, de fibres longues et continues en céramique. Ainsi, les fibres utilisées peuvent se présenter dans la matrice selon une configuration unidirectionnelle, ou sous la forme de tissus, ou de mats non tissés, ou bien encore selon une configuration multidirectionnelle.

Eventuellement, l'agent de renforcement pourrait se présenter sous la forme de fibres courtes et/ou de whiskers, orientés de façon aléatoire dans la matrice.

On peut utiliser aussi comme agent de renforcement des fibres longues en combinaison avec des whiskers et/ou des fibres courtes dispersés dans la matrice.

D'un point de vue résistance mécanique, les matériaux composites préférés selon l'invention sont ceux soit à renfort fibreux unidirectionnel, c'est-à-dire constitué de fibres substantiellement toutes parallèles entre elles et orientées dans une seule et même direction (composite 1D), soit à renfort fibreux bidirectionnel, c'est à dire constitué de fibres substantiellement toutes parallèles entre elles mais de direction croisée dans deux plans horizontaux successifs, l'angle de croisure étant avantageusement choisi égal à 90° pour obtenir les meilleures propriétés mécaniques (composite 2 D).

A titre de fibres céramiques pouvant convenir pour la constitution du renfort fibreux, on peut citer notamment celles en carbone, en bore, en alumine, en alumine-silice, en alumine-silice-bore, en carbure de silicium, en nitrure de silicium, en nitrure de bore et en carbonitrure de silicium. Bien entendu, des mélanges entre des fibres de nature céramique différente peuvent être utilisés à la réalisation du renfort.

Les fibres céramiques en carbure de silicium conviennent particulièrement bien pour la réalisation de composites à haute tenue thermomécanique.

La fraction volumique de l'agent de renforcement dans le matériau composite peut être comprise entre 20 % et 70 %, de préférence entre 30 et 50 %.

Les matériaux composites selon l'invention peuvent être préparés selon toutes méthodes bien connues en soi dans ce domaine.

Notamment, ils peuvent être avantageusement obtenus selon des techniques classiques reposant sur l'imprégnation d'un agent de renforcement, de type fibreux par exemple (fibres unidirectionnelles, etc ...) au moyen d'une barbotine contenant tous les éléments nécessaires à l'obtention de la composition vitreuse désirée, le séchage de l'agent de renforcement ou le renfort fibreux ainsi imprégné, la répétition éventuelle des étapes d'imprégnation-séchage jusqu'à l'obtention d'un préimprégné ayant la fraction volumique de fibres recherchée, et enfin la densification de ce préimprégné au moyen par exemple d'une étape de pressage à chaud.

Selon une variante du procédé ci-dessus, convenant plus particulièrement pour la préparation de composites 1D ou 2D tels que définis ci-avant, on peut également procéder à l'empilement puis au collage de préimprégnés identiques se présentant sous la forme de feuilles composites à renfort fibreux unidirectionnel, l'empilage se faisant soit en gardant parallèle (composite 1D) soit en croisant (composite 2D) les directions des fibres des feuilles superposées puis enfin au frittage sous pression de l'assemblage monolithique ainsi obtenu. Cette technique est notamment décrite dans le document EP-A-128 409, cité ici à titre de référence.

Conformément à l'invention la barbotine d'imprégnation contient donc, sous une forme finement dispersée, les éléments silicium, aluminium, zirconium, alcalins et alcalino-terreux dans des proportions pondérales respectives exprimées en oxydes qui répondent aux inégalités (1) à (15) définies ci-avant, tous ces éléments dans la barbotine se retrouvant en effet, après pressage à chaud, dans la matrice vitreuse du composite.

Ces éléments sont présents sous la forme d'une masse fondue préalablement obtenue par mélange et fusion soit des oxydes des éléments considérés, soit de précurseurs de ces éléments sous forme de matières naturelles.

C'est ainsi que CaO peut être apporté par exemple par du silicate de calcium (Wollastonite), par du carbonate de calcium (Aragonite, Calcite), par du Feldspath calcique (Anorthite), MgO peut être apporté par du silicate de magnésium (stéatite, Forsterite, Saphirine), par de l'aluminate de magnésium (Spinelle), par un hydrate de magnésium (Brucite) ou du carbonate de magnésium (Magnésite).

On peut aussi introduire ensemble CaO et MgO avec un carbonate double de calcium et de magnésium (Dolomite) ou un silicate double de ces éléments (Diopside), $K_2O$ peut être apporté par du feldspath potassique, $SiO_2$ et $Al_2O_3$ peuvent être fournis ensemble par du kaolin, de la cyanite, de la sillimanite, de l'argile ou séparément par du quartz ou un hydrate d'alumine (hydrargillite, boehmite).

La masse fondue précitée se présente généralement sous forme d'une poudre de granulométrie de préférence inférieure à 50μm et notamment inférieure à 10μm.

Les propriétés de rhéologie et de mouillabilité de la barbotine sont ajustées classiquement par ajout de liants et de solvants de nature et dans des proportions appropriées. Le solvant est éliminé lors de l'étape de séchage.

4

Avant de procéder au frittage de la préforme imprégnée et séchée, il est préférable d'éliminer, partiellement ou totalement, les divers liants qui ont été utilisés à la préparation de la barbotine ; cette opération, dite de décrassage, est classiquement réalisée par traitement thermique modéré de cette préforme, sous air ou sous atmosphère neutre.

Le frittage peut être réalisé dans une plage de température comprise entre 950°C et 1200°C et éventuellement sous atmosphère neutre. Le frittage peut se faire sous charge (pressage à chaud. Dans ce cas, les pressions mises en jeu peuvent être comprises entre 5 et 25 mégaPascals, et les durées des paliers entre 15 minutes et 2 heures.

Les exemples suivants, destinés à illustrer certains des divers aspects et avantages de l'invention, sont donnés à titre purement indicatif et ne peuvent être considérés comme une limite du domaine et de l'esprit de celle-ci.

Exemple 1

Cet exemple concerne deux compositions de matrice vitreuse élaborées à partir d'un mélange de matières premières naturelles.

Les valeurs sont données en % en poids.

Le silicate de calcium (Wollastonite) apporte notamment le CaO, le silicate de magnésium (Steatite) apporte le MgO.

Le Feldspath potassique fournit notamment le $K_2O$, alumine et silice sont apportées par le kaolin.

|  | Mélange A | mélange B |
|---|---|---|
| Feldspath potassique | 25 | 35 |
| Carbonate de baryum | 5 | - |
| Silicate de calcium | 4 | 12 |
| Stéatite | 5 | 12 |
| Kaolin calciné | 20 | 11 |
| Zircon | 10 | 5 |
| Silice | 31 | 25 |

On fond les mélanges A et B et on obtient respectivement des masses vitreuses fondues C et D répondant aux compositions ci-dessous.

|  | Composition C | Composition D |
|---|---|---|
| $SiO2$ | 67,9 | 70,0 |
| $Al2O3$ | 13,5 | 11,3 |
| $K2O$ | 3,8 | 5,3 |
| $Na2O$ | 0,2 | 0,2 |
| CaO | 1,9 | 5,7 |
| BaO | 3,9 | - |
| MgO | 1,6 | 3,9 |
| $ZrO2$ | 6,8 | 3,3 |
| $Fe2O3$ | 0,40 | 0,3 |
| $\Sigma A_2O$ | 4,O | 5,5 |
| $\Sigma BO$ | 7,4 | 9,6 |
| $\Sigma A_2O/\Sigma BO$ | 0,541 | 0,573 |

Exemple 2

On prépare un matériau composite de la manière suivante :

On broie la composition D de l'exemple 1 jusqu'à une granulométrie inférieure à 10 $\mu$m.

On prépare une barbotine d'imprégnation de composition suivante :

| - Composition D broyée | 9,6 kg |
|---|---|
| - Polystyrène | 0,87 kg |
| - Paraffine | 0,21 kg |
| - Dioctylphtalate | 0,36 kg |
| - Cyclohexane | 9,9 litres |

On introduit cette barbotine dans un broyeur en alumine de 50 litres avec 55 kg de billes en alumine et on broie pendant 15 heures.

On effectue un bobinage de plaques sur mandrin polygonal à partir d'une mèche de SiC Nicalon imprégnée dans la barbotine.

On procède a l'empilement des plaques à 0° de manière à obtenir un composite 1D. On décrasse puis on fritte sous charge à une température de 1150°C. La durée du palier est de 1 h. La pression de mise en oeuvre est de 10 MPa.

On refroidit rapidement en, au plus, une heure.

On a reporté dans le tableau ci-dessous les principales propriétés chimique, physique, thermique et mécanique du matériau composite obtenu ainsi que celles de produits de l'art antérieur.

P0 matériau composite selon l'invention.

P1 matériau composite à matrice borosilicaté de composition massique suivante :

| - $SiO_2$ | 80,7% |
|---|---|
| - $Na_2O$ | 3,8% |
| - $K_2O$ | 0,4% |
| - $B_2O_3$ | 12,9% |
| - $Al_2O_3$ | 2,2% |

P2 matériau composite à matrice à 96 % de silice de composition massique suivante :

| - $SiO_2$ | 96% |
|---|---|
| - $Al_2O_3$ | 2% |
| - $B_2O_3$ | 2% |

| | P0 | P1 | P2 |
|---|---|---|---|
| $T_G$ matrice °C | 750 | 530 | 850 |
| température de compression °C à chaud | 1150 | 1150 | 1600 |
| Température limite °C d'utilisation | 900 | 600 | 1000 |
| Fraction volumique de fibres % | 40 | 40 | 35 |
| Taux de densification % | 100 | 100 | 100 |
| Densité | 2,5 | 2,5 | 2,3 |
| Contrainte de rupture en flexion 3 points $\sigma$ r MPa (mesure en température) | | | |
| 20°C | 700 | 470 | 510 |
| 900°C | 700 | 200 | 650 |
| Ténacité MPa $\sqrt{m}$ | 20 | 11,5 | 11,5 |

En ce qui concerne la tenue au vieillissement, on maintient le matériau de l'invention à une certaine température pendant une durée déterminée. On mesure ensuite les caractéristiques mécaniques du produit une fois celui-ci refroidi. Pour le matériau de l'invention, au bout de 3O0 heures à 900°C, on ne note pas de perte des propriétés mécaniques. De plus la tenue à la corrosion est bonne puisque l'on ne mesure aucune perte de masse au bout de 70 H à 20°C ni dans $HNO_3$ en solution à 65 % en volume ni dans $H_2SO_4$ en solution a 97 % en volume.

6

**Revendications**

1. Matériau composite, du type comprenant une matrice en phase vitreuse continue englobant un agent de renforcement, caractérisé par le fait que ladite matrice vitreuse est à base de silice, d'alumine, de zircone, d'oxydes d'alcalins et d'alcalino-terreux, et ceci dans des proportions pondérales qui, rapportées à la masse totale de ladite matrice, répondent aux inégalités suivantes :

$$65\% \leq SiO_2 \leq 80\% \tag{1}$$
$$7\% \leq Al_2O_3 \leq 20\% \tag{2}$$
$$2\% \leq ZrO_2 \leq 10\% \tag{3}$$
$$2\% \leq \Sigma A_2O \leq 7\% \tag{4}$$
$$4\% \leq \Sigma BO \leq 10\% \tag{5}$$

inégalités dans lesquelles $\Sigma A_2O$ et $\Sigma BO$ représentent la somme pondérale respectivement des oxydes d'alcalins et des oxydes alcalino-terreux présents dans ladite matrice et en ce que la teneur en $Li_2O$ dans ladite matrice est inférieure à 0,5% en poids.

2. Matériau composite selon la revendication 1, caractérisé en ce que ladite teneur en $Li_2O$ est nulle.

3. Matériau composite selon la revendication 1, caractérisé en ce que la matrice vitreuse présente une composition telle que :

$$0,2 \leq \frac{\Sigma A_2 O}{\Sigma BO} \leq 1$$

4. Matériau composite selon la revendication 1 ou 3, caractérisé en ce que la matrice vitreuse présente une composition telle que :

$$65\% \leq SiO_2 \leq 75\%$$
$$10\% \leq Al_2O_3 \leq 15\%$$
$$2\% \leq ZrO_2 \leq 8\%$$
$$3\% \leq \Sigma A_2O \leq 6\%$$
$$6\% \leq \Sigma BO \leq 10\%$$

5. Matériau composite selon la revendication 4, caractérisé en ce que la matrice vitreuse présente une composition telle que :

$$0,4 \leq \frac{\Sigma A_2 O}{\Sigma BO} \leq 0,8$$

6. Matériau composite selon l'une quelconque des revendications précédentes, caractérisé en ce que la teneur en $Na_2O$ dans ladite matrice est inférieure à 1% en poids, plus particulièrement 0,5%.

7. Matériau composite selon l'une quelconque des revendications précédentes, caractérisé en ce que la fraction volumique dudit agent de renforcement est comprise entre 20 et 70%.

8. Matériau composite selon la revendication 7, caractérisé en ce que ladite fraction volumique est comprise entre 30 et 50%.

9. Matériau composite selon l'une quelconque des revendications précédentes, caractérisé en ce que ledit agent de renforcement est un renfort de type fibreux.

**10.** Matériau composite selon la revendication 9, caractérisé en ce que ledit renfort fibreux est du type unidirectionnel ou bidirectionnel.

**11.** Matériau composite selon la revendication 7, caractérisé en ce que le renfort fibreux est à base de fibres choisies parmi les fibres en carbone, en bore, en alumine, en alumine-silice, en alumine-silice-bore, en carbure de silicium, en nitrure de silicium, en nitrure de bore et en carbonitrure de silicium.

**12.** Procédé de préparation d'un matériau composite tel que défini à l'une quelconque des revendications précédentes, caractérisé en ce qu'il comprend les étapes suivantes :
a) on imprègne un agent de renforcement au moyen d'une barbotine contenant tous les éléments nécessaires à l'obtention de la matrice vitreuse désirée,
b) on sèche l'agent de renforcement ainsi imprégné,
c) on repète éventuellement les étapes d'imprégnation-séchage jusqu'à l'obtention d'un préimprégné ayant la fraction volumique de fibres recherchée,
d) on procède éventuellement à l'empilement puis au collage de préimprégnés identiques dans le but d'obtenir des composites à renfort mono ou bidirectionnel de grandes tailles,
e) puis on densifie la préforme obtenue.

**13.** Procédé selon la revendication 12, caractérisé en ce qu'on densifie la préforme précitée par traitement à une température comprise entre 950 et 1200°C.

**14.** Procédé selon l'une quelconque des revendications 12 et 13, caractérisé en ce qu'on densifie la préforme précitée par pressage sous une pression comprise entre 5 et 25 MPa.

## Claims

**1.** Composite material, of the type comprising a continuous vitreous phase matrix enclosing a reinforcing agent, characterized in that the said vitreous matrix is based on silica, alumina, zirconia, alkali metal oxides and alkaline earth oxides, these being in proportions by weight which, based on the total weight of the said matrix, correspond to the following inequalities :

$$65 \% \leq SiO_2 \leq 80 \% \qquad (1)$$
$$7 \% \leq Al_2O_3 \leq 20 \% \qquad (2)$$
$$2 \% \leq ZrO_2 \leq 10 \% \qquad (3)$$
$$2 \% \leq \Sigma A_2O \leq 7 \% \qquad (4)$$
$$4 \% \leq \Sigma BO \leq 10 \% \qquad (5)$$

inequalities in which $\Sigma A_2O$ and $\Sigma BO$ represent the total by weight of alkali metal oxides and alkaline earth oxides respectively present in the said matrix and in which the $Li_2O$ content of the said matrix is less than 0.5 % by weight.

**2.** Composite material according to claim 1, characterized in that the said $Li_2O$ content is zero.

**3.** Composite material according to claim 1, characterized in that the composition of the vitreous matrix is such that :

$$0.2 \leq \frac{\Sigma A_2O}{\Sigma BO} \leq 1$$

**4.** Composite material according to claim 1 or 3, characterized in that the composition of the vitreous matrix is such that :

$$65 \% \leq SiO_2 \leq 75 \%$$
$$10 \% \leq Al_2O_3 \leq 15 \%$$
$$2 \% \leq ZrO_2 \leq 8 \%$$

$$3\ \% \leq \Sigma A_2O \leq 6\ \%$$
$$6\ \% \leq \Sigma BO \leq 10\ \%$$

5. Composite material according to claim 4, characterized in that the composition of the vitreous matrix is such that :

$$0.4 \leq \frac{\Sigma A_2O}{\Sigma BO} \leq 0.8$$

6. Composite material according to any one of the preceding claims, characterized in that the $Na_2O$ content of the said matrix is less than 1 % by weight, more particularly 0.5 %.

7. Composite material according to any one of the preceding claims, characterized in that the volume fraction of the said reinforcing agent is between 20 and 70 %.

8. Composite material according to claim 7, characterized in that the said volume fraction is between 30 and 50 %.

9. Composite material according to any one of the preceding claims, characterized in that the said reinforcing agent is a reinforcement of the fibrous type.

10. Composite material according to claim 9, characterized in that the said fibrous reinforcement is of the unidirectional or bidirectional type.

11. Composite material according to claim 7, characterized in that the fibrous reinforcement is based on fibres selected from fibres made of carbon, boron, alumina, alumina-silica, alumina-silica-boron, silicon carbide, silicon nitride, boron nitride and silicon carbonitride.

12. Process for the preparation of a composite material such as defined in any one of the preceding claims, characterized in that it comprises the following stages :
    a) the reinforcing agent is impregnated by means of a slip containing all the elements necessary for obtaining the desired vitreous matrix,
    b) the reinforcing agent thus impregnated is dried,
    c) the impregnation-drying stages are repeated if necessary until a prepreg is obtained having the required volume fraction for the fibres,
    d) if necessary, identical prepregs are then stacked and cemented together with the aim of obtaining large sized composites with mono- or bidirectional reinforcement,
    e) the preform thus obtained is densified.

13. Process according to claim 12, characterized in that the aforementioned preform is densified by treatment at a temperature of between 950 and 1200°C.

14. Process according to either of claims 12 and 13, characterized in that the aforementioned preform is densified by pressing under a pressure of between 5 and 25 MPa.

**Patentansprüche**

1. Verbundwerkstoff des Typs, der eine Matrix mit stetiger Glasphase umfaßt, die ein Verstärkungsmittel umschließt,
   **gekennzeichnet durch**
   die Tatsache, daß der genannten glasartigen Matrix Lithium, Aluminium, Zirkonium, Alkalioxide und Erdalkalioxide zugrunde liegen, und dies in Gewichtsverhältnissen, die, bezogen auf die Gesamtmasse der genannten Matrix, die folgenden Ungleichungen erfüllen:

$$65\ \% \leq SiO_2 \leq 80\ \% \tag{1}$$

$$7\ \% \leq Al_2O_3 \leq 20\ \% \tag{2}$$
$$2\ \% \leq ZrO_2 \leq 10\ \% \tag{3}$$
$$2\ \% \leq \Sigma A_2O \leq 7\ \% \tag{4}$$
$$4\ \% \leq \Sigma BO \leq 10\ \% \ , \tag{5}$$

wobei in den Ungleichungen $\Sigma A_2O$ und $\Sigma BO$ die Gewichtssumme bezüglich den in der genannten Matrix enthaltenen Alkalioxiden bzw. Erdalkalioxiden darstellen, und dadurch, daß der Gehalt an $Li_2O$ in der genannten Matrix geringer als 0,5 Gew.-% ist.

2. Verbundwerkstoff gemäß Anspruch 1,
   **dadurch gekennzeichnet,**
   daß der genannte Gehalt an $Li_2O$ Null ist.

3. Verbundwerkstoff gemäß Anspruch 1,
   **dadurch gekennzeichnet,**
   daß die glasartige Matrix eine Zusammensetzung aufweist wie:

$$0,2 \quad \leq \quad \frac{\Sigma A_2O}{\Sigma BO} \quad \leq \quad 1$$

4. Verbundwerkstoff gemäß Anspruch 1 oder 3,
   **dadurch gekennzeichnet,**
   daß die glasartige Matrix eine Zusammensetzung aufweist wie:

$$65\ \% \leq SiO_2 \leq 75\ \%$$
$$10\ \% \leq Al_2O_3 \leq 15\ \%$$
$$2\ \% \leq ZrO_2 \leq 8\ \%$$
$$3\ \% \leq \Sigma A_2O \leq 6\ \%$$
$$6\ \% \leq \Sigma BO \leq 10\ \%.$$

5. Verbundwerkstoff gemäß Anspruch 4,
   **dadurch gekennzeichnet,**
   daß die glasartige Matrix eine Zusammensetzung aufweist wie:

$$0,4 \quad \leq \quad \frac{\Sigma A_2O}{\Sigma BO} \quad \leq \quad 0,8$$

6. Verbundwerkstoff gemäß einem der voranstehenden Ansprüche,
   **dadurch gekennzeichnet,**
   daß der Gehalt an $Na_2O$ in der genannten Matrix geringer als 1 Gew.-% ist, insbesondere 0,5 %.

7. Verbundwerkstoff gemäß einem der voranstehenden Ansprüche,
   **dadurch gekennzeichnet,**
   daß der Volumenanteil des genannten Verstärkungsmittels zwischen 20 und 70 % liegt.

8. Verbundwerkstoff gemäß Anspruch 7,
   **dadurch gekennzeichnet,**
   daß der genannte Volumenanteil zwischen 30 und 50 % liegt.

9. Verbundwerkstoff gemäß einem der voranstehenden Ansprüche,
   **dadurch gekennzeichnet,**
   daß das genannte Verstärkungsmittel eine Verstärkung des Fasertyps ist.

**10.** Verbundwerkstoff gemäß Anspruch 9,
**dadurch gekennzeichnet,**
daß die genannte Faserverstärkung vom unidirektionalen oder bidirektionalen Typ ist.

**11.** Verbundwerkstoff gemäß Anspruch 7,
**dadurch gekennzeichnet,**
daß der Faserverstärkung Fasern zugrundeliegen, die aus den Karbon-, Bor-, Aluminium-, Aluminium-Silizium-, Aluminium-Silizium-Bor-, Siliziumkarbid-, Siliziumnitrid-, Bornitrid- und Siliziumkarbonitridfasern ausgewählt sind.

**12.** Verfahren zur Herstellung eines Verbundwerkstoffs, wie in einem der voranstehenden Ansprüche definiert,
**dadurch gekennzeichnet,**
daß es die folgenden Schritte umfaßt:
a) das Verstärkungsmittel wird mittels eines Breis imprägniert, der alle die Elemente enthält, die zur Erlangung der gewünschten glasartigen Matrix erforderlich sind,
b) das so imprägnierte Verstärkungsmittel wird getrocknet,
c) die Imprägnier-Trocknungs-Schritte werden gegebenenfalls wiederholt, bis ein Prepreg erreicht ist, das den angestrebten Faservolumenanteil aufweist,
d) gegebenenfalls wird fortgefahren mit dein Stapeln und anschließenden Verkleben identischer Prepregs mit dem Ziel, Verbundwerkstoffe mit mono- oder bidirektionaler Verstärkung großer Abmessungen zu erhalten,
e) die erhaltene Vorform wird dann verdichtet.

**13.** Verfahren gemäß Anspruch 12,
**dadurch gekennzeichnet,**
daß die vorgenannte Vorform durch Behandlung bei einer Temperatur zwischen 950 und 1200°C verdichtet wird.

**14.** Verfahren gemäß einem der voranstehenden Ansprüche 12 und 13,
**dadurch gekennzeichnet,**
daß die vorgenannte Vorform durch Verpressen mit einem Druck zwischen 5 und 25 MPa verdichtet wird.